# EUROPÄISCHE PATENTSCHRIFT

(11) **EP 4 198 273 B1**
(45) Veröffentlichungstag und Bekanntmachung des Hinweises auf die Patenterteilung: **19.06.2024**
(21) Anmeldenummer: 22207663.0
(22) Anmeldetag: 16.11.2022
(51) Int. Cl.: F01N 3/20, F01N 3/027

(54) **ABGASHEIZER**
EXHAUST GAS HEATER
DISPOSITIF DE CHAUFFAGE DE GAZ D'ÉCHAPPEMENT

(30) Priorität: 14.12.2021 DE 102021132932
(43) Veröffentlichungstag der Anmeldung: 21.06.2023
(73) Patentinhaber: Purem GmbH, 66539 Neunkirchen (DE)
(72) Erfinder: Häberle, Jürgen, Stuttgart (DE); Karekar, Amol Anil, Esslingen (DE)
(74) Vertreter: Ruttensperger Lachnit Trossin Gomoll

(56) Entgegenhaltungen:
- DE-A1-102021 109 568
- DE-U1-202021 102 620

## Beschreibung

Die vorliegende Erfindung betrifft einen Abgasheizer, mit welchem in einer Abgasanlage eines Kraftfahrzeugs Wärme auf das darin strömende, von einer Brennkraftmaschine ausgestoßene Abgas übertragen werden kann, um dadurch insbesondere in einer Startphase des Betriebs einer Brennkraftmaschine stromabwärts bezüglich des Abgasheizers angeordnete Systembereiche, wie zum Beispiel Katalysatoren oder Partikelfilter, schneller auf Betriebstemperatur zu bringen.

Aus der nachveröffentlichten deutschen Patentanmeldung DE 10 2021 109 568 ist ein Abgasheizer bekannt, bei welchem zwischen zwei aus Blechmaterial aufgebauten, im Wesentlichen plattenartigen Trägerelementen einer Trägeranordnung zwei durch Heraustrennen aus einem Flachmaterial bereitgestellte, im Wesentlichen plattenartig bzw. flächig ausgebildete Heizleiter einer Heizleiteranordnung in einer Abgas-Hauptströmungsrichtung aufeinander folgend angeordnet sind. Durch eine Mehrzahl von bolzenartig ausgebildeten Verbindungselementen ist der geschichtete Aufbau von Trägerelementen und dazwischen angeordneten Heizleitern zusammengehalten. Um eine elektrische Isolierung der Heizleiter bezüglich der Trägerelemente bzw. auch bezüglich einander zu erreichen, sind zwischen diesen jeweils mehrere Abstützelemente aus elektrisch isolierendem Material, beispielsweise Keramikmaterial, angeordnet. Die DE2021102620U1 zeigt einen weiteren Abgasheizer.

Es ist die Aufgabe der vorliegenden Erfindung, einen Abgasheizer bereitzustellen, bei welchem ein von der Temperatur des Abgasheizers unabhängig stabiler Verbund der Komponenten des Abgasheizers gewährleistet ist.

Erfindungsgemäß wird diese Aufgabe gelöst durch einen Abgasheizer für eine Abgasanlage einer Brennkraftmaschine gemäß Anspruch 1. Der Abgasheizer umfasst eine Trägeranordnung und eine an der Trägeranordnung getragene Heizleiteranordnung mit wenigstens einem stromdurchflossenen Heizleiter, wobei der wenigstens eine Heizleiter durch wenigstens ein in Richtung einer Verbindungselement-Längsachse langgestrecktes Verbindungselement bezüglich der Trägeranordnung getragen ist, wobei in Zuordnung zu wenigstens einem Verbindungselement wenigstens eine Längenkompensationsanordnung mit einem ersten Längenkompensationselement mit einer eine Keilformation bereitstellenden ersten Abstützfläche und einem zweiten Längenkompensationselement mit einer an der ersten Abstützfläche abgestützten, eine Gegen-Keilformation bereitstellenden zweiten Abstützfläche vorgesehen ist, wobei das erste Längenkompensationselement und das zweite Längenkompensationselement zueinander unterschiedliche Wärmeausdehnungskoeffizienten aufweisen.

Durch die aneinander anliegenden Abstützflächen an den beiden Längenkompensationselementen, die mit Materialien mit unterschiedlichen Wärmeausdehnungskoeffizienten aufgebaut sind, und durch die durch die Wechselwirkung der beiden Abstützflächen generierte Keilwirkung wird bei Erwärmung des Abgasheizers dasjenige Längenkompensationselement, das mit geringerem Wärmeausdehnungskoeffizienten ausgebildet ist, sich weniger stark ausdehnen, als das andere Längenkompensationselement, wird jedoch durch dieses andere Längenkompensationselement in Richtung der Verbindungselement-Längsachse verschoben bzw. beaufschlagt. Dadurch wird insbesondere eine bei Erwärmung auftretende Ausdehnung des zugeordneten Verbindungselements in Richtung von dessen Längsachse kompensiert, so dass auch mit zunehmender Temperatur ein fester Zusammenhalt der Heizleiteranordnung mit der Trägeranordnung gewährleistet werden kann.

Um einen elektrischen Kurzschluss zu vermeiden, wird vorgeschlagen, dass der wenigstens eine Heizleiter vermittels wenigstens einer Trägeranordnung-Abstützeinheit elektrisch isoliert bezüglich der Trägeranordnung abgestützt ist.

Für einen auch unter starker thermischer und mechanischer Belastung stabilen Aufbau kann die Trägeranordnung zwei die Heizleiteranordnung in Richtung einer Abgasheizer-Längsachse zwischen sich aufnehmende Trägerelemente umfassen, und die Heizleiteranordnung kann bezüglich jedes Trägerelements vermittels wenigstens einer Trägeranordnung-Abstützeinheit elektrisch isoliert abgestützt sein.

Bei einem einfach und mit einer geringen Anzahl an Bauteilen realisierbaren und daher insbesondere auch sehr kompakten Aufbau kann wenigstens eine Trägeranordnung-Abstützeinheit eine Längenkompensationsanordnung bereitstellen.

Eine Längenkompensation insbesondere bei thermisch bedingter Ausdehnung eines Verbindungselements kann auch dadurch erreicht werden, dass wenigstens ein, vorzugsweise jedes Verbindungselement in Richtung der Verbindungselement-Längsachse bezüglich der Trägeranordnung vermittels wenigstens einer Längenkompensationsanordnung abgestützt ist.

Zum Erhalt einer definierten Keil-Wechselwirkung zwischen den Längenkompensationselementen einer Längenkompensationsanordnung kann bei wenigstens einer, vorzugsweise jeder Längenkompensationsanordnung das erste Längenkompensationselement eine von der ersten Abstützfläche wenigstens teilweise umgebene erste Verbindungselement-Durchgriffsöffnung aufweisen, oder/und kann das zweite Längenkompensationselement eine von der zweiten Abstützfläche wenigstens teilweise umgebene zweite Verbindungselement-Durchgriffsöffnung aufweisen.

Bei wenigstens einer, vorzugsweise jeder Längenkompensationsanordnung kann die erste Abstützfläche oder/und die zweite Abstützfläche kegelstumpfförmig ausgebildet sein.

Um die durch die Längenkompensationselemente bereitgestellten Keilwirkung besonders effizient nutzen zu können, wird vorgeschlagen, dass die dem Längenkompensationselement mit kleinerem Wärmeausdehnungskoeffizienten zugeordnete Abstützfläche von erster Abstützfläche und zweiter Abstützfläche dem Verbindungselement zugewandt orientiert ist, und dass die dem Längenkompensationselement mit größerem Wärmeausdehnungskoeffizienten zugeordnete Abstützfläche von erster Abstützfläche und zweiter Abstützfläche vom dem Verbindungselement abgewandt orientiert ist.

Insbesondere bei Ausgestaltung der Abstützflächen als kegelstumpfförmige Flächen kann hierzu vorgesehen sein, dass die dem Längenkompensationselement mit kleinerem Wärmeausdehnungskoeffizienten zugeordnete Abstützfläche von erster Abstützfläche und zweiter Abstützfläche eine Innen-Kegelstumpffläche ist, und dass die dem Längenkompensationselement mit größerem Wärmeausdehnungskoeffizienten zugeordnete Abstützfläche von erster Abstützfläche und zweiter Abstützfläche eine Außen-Kegelstumpffläche ist.

Für einen kostengünstig zu realisierenden, gleichwohl stabilen und gegen den Einfluss von Abgas resistenten Aufbau wird vorgeschlagen, dass bei wenigstens einer, vorzugsweise jeder Längenkompensationsanordnung wenigstens ein Längenkompensationselement von erstem Längenkompensationselement und zweitem Längenkompensationselement mit Metallmaterial aufgebaut ist.

Insbesondere dann, wenn vermittels einer Längenkompensationsanordnung die Heizleiteranordnung elektrisch isoliert bezüglich der Trägeranordnung abgestützt werden soll, ist es vorteilhaft, wenn bei wenigstens einer, vorzugsweise jeder Längenkompensationsanordnung wenigstens ein Längenkompensationselement von erstem Längenkompensationselement und zweitem Längenkompensationselement mit elektrisch isolierendem Material, vorzugsweise Keramikmaterial, aufgebaut ist.

Zur Abstützung bezüglich der Heizleiteranordnung bzw. der Trägeranordnung kann bei wenigstens einer, vorzugsweise jeder Längenkompensationsanordnung das erste Längenkompensationselement eine zur Verbindungselement-Längsachse im Wesentlichen orthogonale dritte Abstützfläche aufweisen, oder/und kann das zweite Längenkompensationselement eine zur Verbindungselement-Längsachse im Wesentlichen orthogonale vierte Abstützfläche aufweisen.

Wenigstens ein, vorzugsweise jedes Verbindungselement kann einen Schraubbolzen mit einem Kopf und einem Außengewindeschaft sowie eine in Gewindeeingriff mit dem Außengewindeschaft stehende Mutter umfassen. Zur Abstützung eines derartigen Verbindungselements bezüglich der Trägeranordnung kann dann weiter vorgesehen sein, dass bei wenigstens einem, vorzugsweise jedem Verbindungselement der Kopf oder/und die Mutter vermittels einer Längenkompensationsanordnung bezüglich der Trägeranordnung abgestützt ist.

Eine kompakte Bauart kann dadurch unterstützt werden, dass wenigstens ein, vorzugsweise jedes Verbindungselement einen in wenigstens einem, vorzugsweise jedem axialen Endbereich mit der Trägeranordnung durch Materialschluss verbundenen Verbindungsbolzen umfasst.

Die Erfindung betrifft ferner eine Abgasanlage für eine Brennkraftmaschine mit wenigstens einem Abgasheizer mit erfindungsgemäßem Aufbau

Die vorliegende Erfindung wird nachfolgend mit Bezug auf die beiliegenden Figuren detailliert beschrieben. Es zeigt:
- Fig. 1: eine perspektivische Ansicht eines Abgasheizers;
- Fig. 2: eine Längsschnittansicht des Abgasheizers der Fig. 1;
- Fig. 3: einen Längsschnitt eines Abgasheizers mit in Zuordnung zu einem Verbindungselement angeordneten Trägeranordnung-Abstützeinheiten und einer Längenkompensationsanordnung in prinzipartiger Darstellung;
- Fig. 4: eine der Fig. 3 entsprechende Darstellung einer alternativen Ausgestaltungsart;
- Fig. 5: eine weitere der Fig. 3 entsprechende Darstellung einer alternativen Ausgestaltungsart;
- Fig. 6: eine weitere der Fig. 3 entsprechende Darstellung einer alternativen Ausgestaltungsart;
- Fig. 7: eine der Fig. 3 entsprechende Darstellung einer alternativen Ausgestaltungsart;
- Fig. 8: eine weitere der Fig. 3 entsprechende Darstellung einer alternativen Ausgestaltungsart;
- Fig. 9: eine weitere der Fig. 3 entsprechende Darstellung einer alternativen Ausgestaltungsart;
- Fig. 10: eine weitere der Fig. 3 entsprechende Darstellung einer alternativen Ausgestaltungsart;
- Fig. 11: eine weitere der Fig. 3 entsprechende Darstellung einer alternativen Ausgestaltungsart.

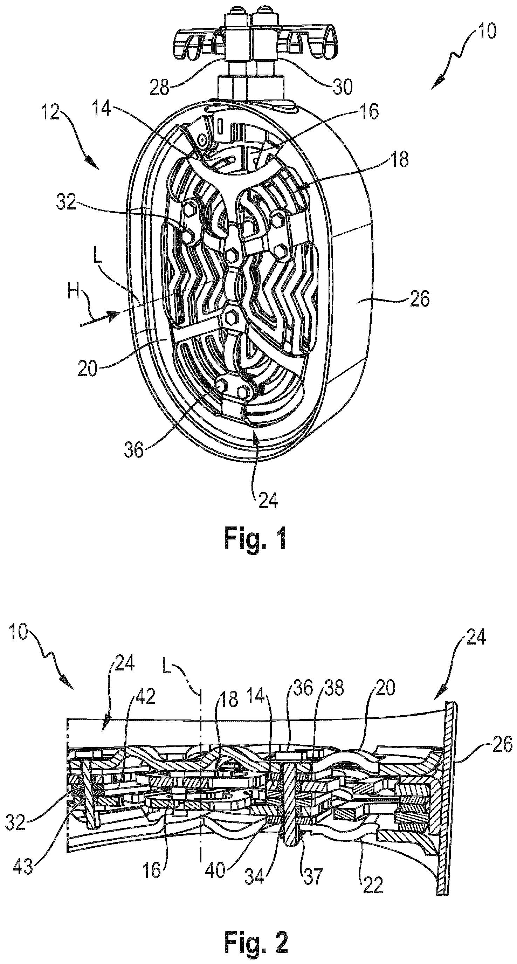

In den Fig. 1 und 2 ist ein Abgasheizer 10 für eine Abgasanlage 12 einer Brennkraftmaschine, beispielsweise an einem Kraftfahrzeug, dargestellt. Der Abgasheizer 10 ist in der Abgasanlage 12 von Abgas in einer Abgas-Hauptströmungsrichtung H durchströmbar und weist zwei in Richtung einer Abgasheizer-Längsachse L aufeinanderfolgend angeordnete und somit von im Wesentlichen in der Abgas-Hauptströmungsrichtung H strömendem Abgas nacheinander umströmbare Heizleiter 14, 16 einer allgemein mit 18 bezeichneten Heizleiteranordnung auf. Die Heizleiter 14, 16 sind im Wesentlichen plattenartig bzw. aus Flachmaterial aufgebaut und können mit ihrer mit einer Mehrzahl von in mäanderartiger Struktur verlaufenden Abschnitten bereitgestellten Struktur durch Heraustrennen aus einem Flachmaterialrohling, insbesondere einem Metallrohling, erzeugt werden.

An den in der Abgasheizer-Längsrichtung L voneinander abgewandt liegenden Seiten der beiden Heizleiter 14, 16 sind im Wesentlichen plattenartig gestaltete Trägerelemente 20, 22 einer allgemein mit 24 bezeichneten Trägeranordnung vorgesehen. An ihrem Außenumfangsbereich sind die plattenartigen Trägerelemente 20, 22 an einem im Wesentlichen zylindrischen Trägergehäuse 26 festgelegt.

Die beiden Heizleiter 14, 16 können zueinander seriell oder parallel geschaltet sein. Zur elektrischen Verbindung mit einer Spannungsquelle sind zwei das Trägergehäuse 26 durchsetzende Anschlusseinheiten 28, 30 vorgesehen, welche in dem von dem Trägergehäuse 26 umgebenen Innenraum mit den Heizleitern 14, 16 elektrisch leitend verbunden sind.

Zum Erhalt eines stabilen Verbundes sind die beiden Trägerelemente 20, 22 und die dazwischen angeordneten, einander unmittelbar benachbart liegenden Heizleiter 14, 16 durch eine Mehrzahl von bolzenartig ausgebildeten Verbindungselementen 32 fest miteinander verbunden. Die Verbindungselemente 32 können beispielsweise als Schraubbolzen mit einem Außengewindeschaft 34 und einem Kopf 36 ausgebildet sein. Auf den Außengewindeschaft 34 ist eine Mutter 37 aufgeschraubt, um den geschichteten Aufbau aus Trägerelementen 20, 22 und Heizleitern 14, 16 einzuspannen. Die Verbindungselemente 32 können beispielsweise mit Stahlmaterial oder einer Nickel-Chrom-Legierung aufgebaut sein.

Um eine elektrische Isolierung der Heizleiter 14, 16 bezüglich der im Allgemeinen aus Metallmaterial aufgebauten Trägerelemente 20, 22 der Trägeranordnung 24 zu erreichen, ist zwischen dem Heizleiterelement 14 und dem Trägerelement 20 beispielsweise in Zuordnung zu jedem Verbindungselement 32 eine mit elektrisch isolierendem Material, beispielsweise Keramikmaterial, aufgebaute, im Wesentlichen plattenartig bzw. ringscheibenartig ausgebildete und von dem zugeordneten Verbindungselement 32 im Bereich einer darin vorgesehenen Öffnung durchsetzte Trägeranordnung-Abstützeinheit 38 vorgesehen. Gleichmaßen ist beispielsweise in Zuordnung zu jedem Verbindungselement 32 eine zwischen dem Heizleiter 16 und dem Trägerelement 22 angeordnete Trägerelement-Abstützeinheit 40 vorgesehen. Die Trägerelement-Abstützeinheiten 38, 40 können beispielweise zueinander im Wesentlichen baugleich sein.

Um die beiden nebeneinander liegenden Heizleiter 14, 16 bezüglich einander elektrisch isoliert abzustützen, ist beispielsweise in Zuordnung zu jedem Verbindungselement 32 eine Heizleiter-Abstützeinheit 42 vorgesehen. Auch jede Heizleiter-Abstützeinheit 42 ist im Wesentlichen plattenartig mit einer oder mehreren Scheiben ausgebildet und mit Keramikmaterial aufgebaut.

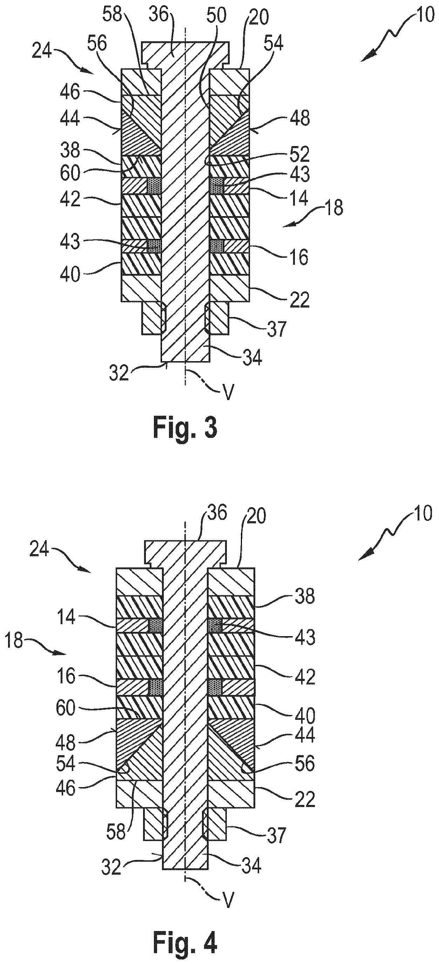

Mit Bezug auf die Fig. 3-11 werden nachfolgend verschiedene Ausgestaltungsformen von Abgasheizern insbesondere hinsichtlich der festen Verbindung der Trägeranordnung 24 bzw. der Trägerelemente 20, 22 derselben mit der Heizleiteranordnung 18 bzw. den Heizleitern 14, 16 derselben durch diese Komponenten zusammenhaltende Verbindungselemente 32 beschrieben. Dargestellt ist in den Fig. 3-11 jeweils der Bereich eines Heizleiters, in welchem ein Verbindungselement 32 positioniert ist bzw. zugeordnete Öffnungen in den Trägerelementen 20, 22 bzw. den Heizleitern 14, 16 durchsetzt. Aufgrund der einfachen baulichen Ausgestaltung ist es vorteilhaft, wenn bei einem jeweiligen Abgasheizer alle Bereiche, in welchen vermittels eines jeweiligen Verbindungselements 32 ein fester Verbund der Trägerelemente 20, 22 mit den Heizleitern 14,16 realisiert ist, gleich gestaltet sind. Grundsätzlich könnten in derartigen Bereichen jedoch verschiedene Ausgestaltungen zum Bereitstellen des festen Verbundes vorgesehen sein.

Die Fig. 3 zeigt für eine erfindungsgemäße Ausgestaltung eines Abgasheizers 10 in prinzipartiger Darstellung den Bereich der Verbindung der beiden Trägerelemente 20, 22 und der dazwischen angeordneten Heizleiter 14, 16 vermittels eines Verbindungselements 32. Zwischen den beiden Heizleitern 14, 16 ist die Heizleiter-Abstützeinheit 42 zu erkennen. Dort, wo die Heizleiter 14, 16 von dem Verbindungselement 32 durchsetzt sind, können in die in den Heizleitern 14, 16 gebildeten Öffnungen hülsenartige Isolierelemente 43 eingesetzt werden, um eine definierte Positionierung des Verbindungselements 32 in den in den Heizleitern 14, 16 vorgesehenen Öffnungen zu erreichen.

Zwischen dem Trägerelement 20 der Trägeranordnung 24 und der Trägeranordnung-Abstützeinheit 38 ist eine allgemein mit 44 bezeichnete Längenkompensationsanordnung angeordnet. Die dem dargestellten Verbindungselement 32 zugeordnete Längenkompensationsanordnung 44 umfasst zwei Längenkompensationselemente 46, 48, welche jeweils eine vom Außengewindeschaft 34 des Verbindungselements 32 durchsetzte Verbindungselement-Durchgriffsöffnung 50, 52 aufweisen. Das erste Verbindungselement 46 ist mit einer kegelstumpfförmigen ersten Abstützfläche 54 ausgebildet, welche eine Außen-Kegelstumpffläche bereitstellt. Das zweite Verbindungselement 48 ist mit einer kegelstumpfförmigen zweiten Abstützfläche 56 ausgebildet, welche eine Innen-Kegelstumpffläche bereitstellt und den gleichen Kegelwinkel aufweist, wie die erste Abstützfläche 54 und an dieser abgestützt ist. Die erste Abstützfläche 54 stellt eine Keilformation bereit, welche mit der eine Gegen-Keilformation bereitstellenden zweiten Abstützfläche 56 zusammenwirkt.

Die beiden Längenkompensationselemente 46, 48 sind mit Materialien mit unterschiedlichen Wärmeausdehnungskoeffizienten bzw. Längenausdehnungskoeffizienten aufgebaut. Bei einer vorteilhaften Ausgestaltung weist das Aufbaumaterial des ersten Längenkompensationselements 46 einen größeren, vorteilhafterweise einen deutlich größeren Wärmeausdehnungskoeffizienten auf, als das Aufbaumaterial des zweiten Längenkompensationselements 48.

Bei dem in Fig. 3 dargestellten Ausgestaltungsbeispiel ist das erste Längenkompensationselement mit einer zur Verbindungselement-Längsachse V im Wesentlichen orthogonalen dritten Abstützfläche 58 am Trägerelement 20 abgestützt. Das zweite Längenkompensationselement 48 ist mit einer zur Verbindungselement-Längsachse V im Wesentlichen orthogonalen vierten Abstützfläche 60 an der mit elektrisch isolierendem Material aufgebauten Trägeranordnung-Abstützeinheit 38 abgestützt. Da somit durch die zugeordnete Trägeranordnung-Abstützeinheit 38 die Längenkompensationsanordnung 44 bezüglich der Heizleiteranordnung 18, insbesondere bezüglich des Heizleiters 14, elektrisch isoliert abgestützt ist, müssen die Längenkompensationselemente 46, 48 nicht notwendigerweise mit elektrisch isolierendem Material aufgebaut sein. Jedes der Längenkompensationselemente 46, 48 kann beispielsweise mit Metallmaterial aufgebaut sein, wobei diese Aufbaumaterialien so zu wählen sind, dass die Bedingung erfüllt ist, dass das Aufbaumaterial des ersten Längenkompensationselements 46 einen größeren, insbesondere einen deutlich größeren Wärmeausdehnungskoeffizienten aufweist, als das Aufbaumaterial des zweiten Längenkompensationselements. Grundsätzlich könnte jedoch auch zumindest eines der beiden Längenkompensationselemente 46, 48 mit elektrisch isolierendem Material, beispielsweise Keramikmaterial, aufgebaut sein, wobei gleichermaßen die Bedingung zu erfüllen ist, dass das Aufbaumaterial von einem der beiden Kompensationselemente 46, 48, vorzugsweise das Aufbaumaterial des ersten Längenkompensationselements 46, einen größeren, vorzugsweise einen deutlich größeren Wärmeausdehnungskoeffizienten aufweist, als das Aufbaumaterial des jeweils anderen Längenkompensationselements.

Im Betrieb eines derartigen Abgasheizers 10 kann dessen Temperatur auf Werte von über 900°C ansteigen. Dies kann zu einer vergleichsweise starken thermischen Ausdehnung verschiedener Komponenten, insbesondere des Verbindungselements 32 führen. Eine übermäßige thermisch indizierte Längenzunahme des Außengewindeschafts 34 könnte dazu führen, dass die feste Verspannung der durch das Verbindungselement 32 zusammenzuhaltenden Komponenten verloren geht. Eine derartige thermisch indizierte Längenausdehnung des Verbindungselements 32 wird jedoch durch die Längenkompensationsanordnung 44 dadurch kompensiert, dass das sich unter Wärmeeinfluss vergleichsweise stark ausdehnende Längenkompensationselement, insbesondere das mit größerem Wärmeausdehnungskoeffizienten ausgebildete erste Längenkompensationselement 46, sich gleichermaßen in Richtung der Verbindungselement-Längsachse V ausdehnt und durch die Keilwirkung das andere Längenkompensationselement, also beispielsweise das zweite Längenkompensationselement 48 mit geringerem Wärmeausdehnungskoeffizient, in Richtung der Verbindungselement-Längsachse V beaufschlagt bzw. verschiebt. Dadurch wird eine Längenausdehnung des Verbindungselements 32 bzw. des Außengewindeschafts 34 desselben kompensiert und ein fester Zusammenhalt der zwischen dem Kopf 36 und der Mutter 37 eingespannten Komponenten beibehalten. Insbesondere ist es hierfür vorteilhaft, wenn das mit geringerer axialer Baulänge als der Außengewindeschaft 34 ausgebildete Längenkompensationselement mit größerem Wärmeausdehnungskoeffizient einen Wärmeausdehnungskoeffizient aufweist, der größer ist, insbesondere deutlich größer ist, als der Wärmeausdehnungskoeffizient des Aufbaumaterials des Verbindungselements 32 bzw. des Außengewindeschafts 34 desselben. Der Wärmeausdehnungskoeffizient des Längenkompensationselements mit geringerem Wärmeausdehnungskoeffizienten kann beispielsweise kleiner sein als der Wärmeausdehnungskoeffizient des Verbindungselements 32.

Eine abgewandelte Ausgestaltungsform ist in Fig. 4 dargestellt. Auch bei der in Fig. 4 dargestellten Ausgestaltungsform ist die Längenkompensationsanordnung 44 zwischen den beiden Trägerelementen 20, 22 der Trägeranordnung 24 angeordnet, liegt jedoch zwischen dem Trägerelement 22 und der eine elektrische Isolierung bezüglich des Heizleiters 16 bereitstellenden Trägeranordnung-Abstützeinheit 40. Die Wirkungsweise entspricht der vorangehend mit Bezug auf die Fig. 3 beschriebenen Wirkungsweise.

Es ist mit Bezug auf die Fig. 3 und 4 darauf hinzuweisen, dass, unabhängig davon, an welcher Position die mit den beiden Längenkompensationselementen 46, 48 aufgebaute Längenkompensationsanordnung 44 vorgesehen ist, diese auch derart eingebaut sein könnte, dass das zweite Längenkompensationselement 48 mit seiner vierten Abstützfläche 60 an einem der beiden Trägerelemente 20, 22 abgestützt ist, während das erste Längenkompensationselement 46 mit seiner dritten Abstützfläche 58 an einer der beiden Trägeranordnung-Abstützeinheiten 38, 40 abgestützt ist.

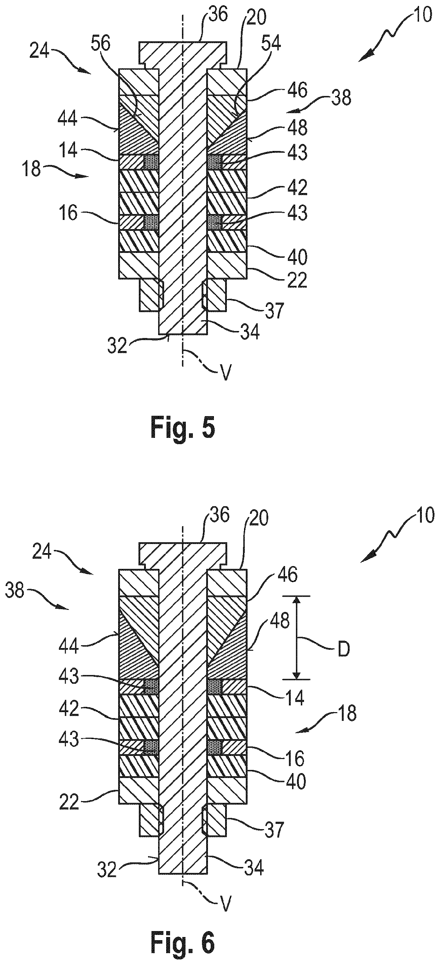

Die Fig. 5 zeigt eine Ausgestaltung, bei welcher eine der beiden Trägeranordnung-Abstützeinheiten 38, 40, insbesondere die Trägeranordnung-Abstützeinheit 38, durch die Längenkompensationsanordnung 44 bereitgestellt ist. Das zweite Längenkompensationselement 48 ist mit seiner vierten Abstützfläche 60 direkt am Heizleiter 14 abgestützt, während, so wie bei der Ausgestaltungsform der Fig. 3, das erste Längenkompensationselement 46 mit seiner dritten Abstützfläche 58 am Trägerelement 20 der Trägeranordnung 24 abgestützt ist. Da das Trägerelement 20 im Allgemeinen mit Blechmaterial aufgebaut und somit elektrisch leitend ist, muss in dieser Ausgestaltung durch die Längenkompensationsanordnung 44 auch die Funktion der elektrischen Isolierung der Heizleiteranordnung 18, insbesondere des Heizleiters 14, bezüglich des Trägerelements 20 realisiert sein. Hierzu muss zumindest eines der Längenkompensationselemente 46, 48 mit elektrisch isolierendem Material aufgebaut sein. Vorteilhafterweise ist das zweite Längenkompensationselement 48 beispielsweise mit Keramikmaterial aufgebaut, wobei gleichermaßen die vorangehend beschriebene Bedingung zu erfüllen ist, dass die beiden Längenkompensationselemente 46, 48 zueinander unterschiedliche, vorzugsweise deutlich unterschiedliche Wärmeausdehnungskoeffizienten aufweisen.

Bei der in Fig. 5 dargestellten Ausgestaltungsform könnte die Längenkompensationsanordnung 44 auch im Bereich zwischen dem Heizleiter 16 und dem Trägerelement 22 angeordnet sein, und auch bei dieser Ausgestaltung könnte die Längenkompensationsanordnung 44 umgedreht eingebaut sein, so dass das eine Außen-Kegelstumpffläche bereitstellende erste Längenkompensationselement 46 mit seiner dritten Abstützfläche 58 an einem der Heizleiter 14, 16 abgestützt ist, während das zweite Längenkompensationselement 48 mit seiner vierten Abstützfläche 60 dann an dem unmittelbar benachbarten Trägerelement 20 oder 22 abgestützt ist.

Die Fig. 6 veranschaulicht beispielhaft anhand der grundsätzlich in Fig. 4 dargestellten Ausgestaltungsvariante, dass zum Bereitstellen der erforderlichen Längenkompensationsfunktion die Baulänge D der Längenkompensationsanordnung 44 variiert werden kann. Zu erkennen ist, dass diese bei der in Fig. 6 dargestellten Ausgestaltungsform eine deutlich größere Ausdehnung in Richtung der Verbindungselement-Längsachse V aufweist, welche beispielsweise im Bereich von 6 mm liegen kann.

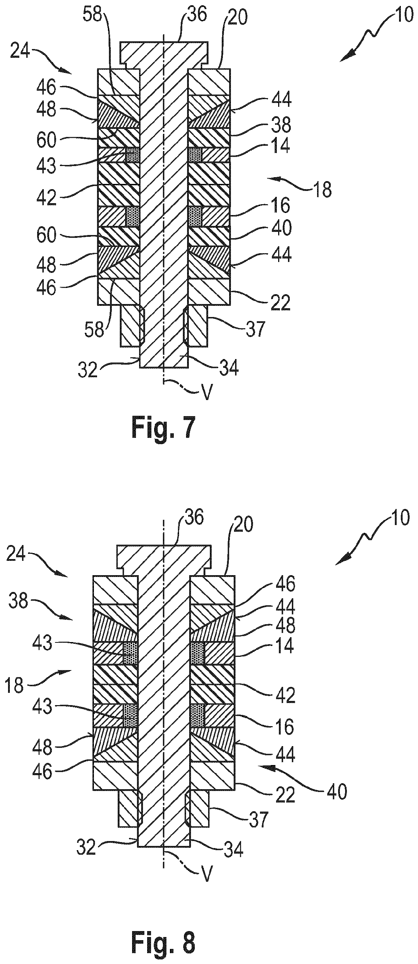

Die Fig. 7 zeigt eine die Ausgestaltungsformen der Fig. 3 und 4 zusammenfassende Ausgestaltungsform eines Abgasheizers 10. Sowohl in Zuordnung zu dem Trägerelement 20, als auch in Zuordnung zu dem Trägerelement 22 ist eine Längenkompensationsanordnung 44 jeweils mit einem ersten Längenkompensationselement 46 und einem zweiten Längenkompensationselement 48 vorgesehen. Dies ermöglicht eine symmetrische Einspannung der Heizleiter 14, 16 zwischen den beiden Trägerelementen 20, 22 und eine Aufteilung der Längenkompensationsfunktion auf zwei in Abstand zueinander liegende axiale Bereiche.

Auch bei der in Fig. 7 dargestellten Ausgestaltungsvariante könnte zumindest eine der beiden Längenkompensationsanordnungen 44 derart eingebaut sein, dass das jeweilige erste Längenkompensationselement 46 bezüglich der jeweils benachbarten Trägeranordnung-Abstützeinheit 38 bzw. 40 abgestützt ist, während das jeweilige zweite Längenkompensationselement 48 bezüglich des jeweils benachbarten Trägerelements 20 bzw. 22 abgestützt ist.

Die Fig. 8 zeigt eine Ausgestaltungsvariante eines Abgasheizers 10, bei welcher, aufbauend auf dem Ausgestaltungsprinzip der Fig. 5, jede der Trägeranordnung-Abstützeinheiten 38, 40 durch eine Längenkompensationsanordnung 44 bereitgestellt ist. Zwischen jedem der beiden Heizleiter 14, 16 und dem jeweils benachbarten Trägerelement 20, 22 liegt eine Längenkompensationsanordnung 44, wobei auch hier die Ausgestaltung derart sein kann, dass das jeweilige mit elektrisch isolierendem Material aufgebaute zweite Längenkompensationselement 48 am Heizleiter 14 bzw. 16 anliegt, während das jeweilige erste Längenkompensationselement 46 am unmittelbar benachbarten Abstützelement 20 bzw. 22 abgestützt ist. Auch hier könnte eine umgekehrte Einbausituation gewählt werden, bei welcher bei zumindest einer der Längenkompensationsanordnungen 44 das zweite Längenkompensationselement 48 am jeweils zugeordneten Trägerelement 20 bzw. 22 abgestützt ist.

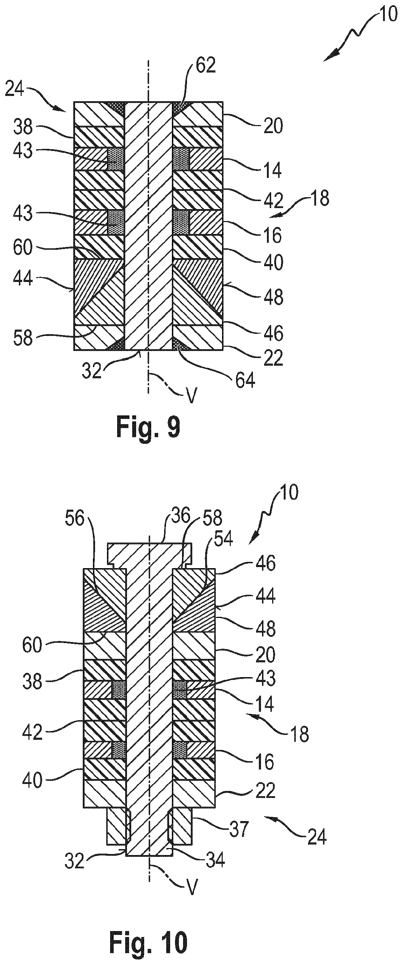

Die Fig. 9 zeigt eine Ausgestaltung eines Heizleiters, bei welcher das bzw. jedes Verbindungselement 32 als Verbindungsbolzen ausgebildet ist, der in seinen beiden axialen Endbereichen im Wesentlichen nicht über die Trägerelemente 20, 22 der Trägeranordnung 24 hervorsteht. Das Verbindungselement 32 ist in jeweilige Öffnungen der Trägerelemente 20, 22 eingesetzt und durch eine beispielsweise umlaufende Schweißnaht 62, 64 mit den Verbindungselementen 20, 22 fest verbunden.

Im Abstützweg zwischen der Trägeranordnung-Abstützeinheit 40 und dem Trägerelement 20 ist eine Längenkompensationsanordnung 44 mit dem vorangehend beschriebenen Aufbau angeordnet. Alternativ oder zusätzlich könnte eine derartige Längenkompensationsanordnung 44 auch im Abstützweg zwischen dem Trägerelement 20 und der Trägeranordnung-Abstützeinheit 38 positioniert sein. Auch hier könnte die Ausgestaltung derart sein, dass bei einer oder ggf. beiden Längenkompensationsanordnungen 44 das jeweilige zweite Längenkompensationselement 48 an dem Trägerelement 20 bzw. 22 abgestützt ist.

Die Fig. 10 zeigt eine Ausgestaltung eines Abgasheizers, bei welcher eine Längenkompensationsanordnung 44 nicht im Abstützweg zwischen den beiden Trägerelementen 20, 22 der Trägeranordnung 24 positioniert ist, sondern im Abstützweg zwischen einem der Trägerelemente 20, 22, insbesondere dem Trägerelement 20, und dem Verbindungselement 32, insbesondere dem Kopf 36 desselben. Das zweite Längenkompensationselement 48 ist mit seiner vierten Abstützfläche 60 am Trägerelement 20 abgestützt, während der Kopf 36 des Verbindungselements 32 an der dritten Abstützfläche 58 des ersten Längenkompensationselements 46 abgestützt ist.

Auch bei dieser Ausgestaltung kann vorgesehen sein, dass das mit seiner ersten Abstützfläche 54 eine Außen-Kegelstumpffläche bereitstellende erste Längenkompensationselement 46 einen größeren, vorzugsweise einen deutlich größeren Wärmeausdehnungskoeffizient aufweist, als das mit seiner zweite Abstützfläche 56 eine Innen-Kegelstumpffläche bereitstellende zweite Längenkompensationselement 48.

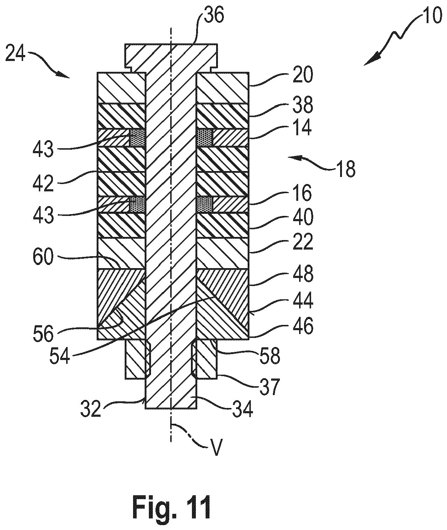

Bei der in Fig. 11 dargestellten Ausgestaltungsform eines Abgasheizers 10 ist die Längenkompensationsanordnung 44 im Abstützweg zwischen dem Trägerelement 22 und der Mutter 37 positioniert, so dass das erste Längenkompensationselement 46 mit seiner dritten Abstützfläche 54 bezüglich der Mutter 37 abgestützt ist und das zweite Längenkompensationselement 48 mit seiner vierten Abstützfläche 60 am Trägerelement 22 abgestützt ist.

Auch bei den in den Fig. 10 und 11 dargestellten Ausgestaltungsformen sind die Aufbaumaterialien der beiden Längenkompensationselement 46, 48 derart aufeinander abgestimmt, dass eines der beiden Längenkompensationselemente 46, 48, vorzugsweise das die als Außen-Kegelstumpffläche ausgebildete erste Abstützfläche 54 bereitstellende erste Längenkompensationselement 46, einen größeren, vorzugsweise deutlich größeren Wärmeausdehnungskoeffizienten aufweist als das andere der beiden Längenkompensationselemente 46, 48.

Grundsätzlich könnte auch bei den in den Fig. 10 und 11 dargestellten Ausgestaltungsvarianten der Aufbau derart sein, dass jeweils das erste Längenkompensationselement 46 an einem der beiden Trägerelemente 20, 22 abgestützt ist, während das zweite Längenkompensationselement 48 dann am Kopf 36 bzw. der Mutter 37 abgestützt ist. Auch könnte in Zuordnung zu jedem der beiden Trägerelemente 20, 22 eine Längenkompensationsanordnung 44 vorgesehen sein. Da auch bei den Ausgestaltungsformen, bei welchen eine bzw. zwei Längenkompensationsanordnungen 44 im Abstützweg zwischen dem Verbindungselement 32 und der Trägeranordnung 44 positioniert ist bzw. sind, die Längenkompensationsanordnung/en keine elektrisch isolierende Funktion zu erfüllen haben, können beispielsweise beide Längenkompensationselemente 46, 48 mit elektrisch leitendem Material, beispielsweise Metallmaterial, aufgebaut sein, wobei wiederum auf die vorangehend dargelegte Bedingung hinsichtlich der Wärmeausdehnungskoeffizienten zu achten ist.

Mit dem erfindungsgemäß aufgebauten Abgasheizer ist sichergestellt, dass auch in thermisch und mechanisch stark belasteten Bereichen einer Abgasanlage einer Brennkraftmaschine eine auch unter Berücksichtigung der durch das Abgas in der Abgasanlage auftretenden korrosiven Belastung stabile Verbindung der verschiedenen Komponenten des Abgasheizers realisiert ist, welche für alle im Betrieb auftretenden Temperaturen einen vollständigen Verlust der Vorspannung vermeidet und somit einen stabilen und spielfreien Zusammenhalt der geschichtet angeordneten Komponenten des Abgasheizers sicherstellt.

## Patentansprüche

1. Abgasheizer für eine Abgasanlage einer Brennkraftmaschine, umfassend eine Trägeranordnung (24) und eine an der Trägeranordnung (24) getragene Heizleiteranordnung (18) mit wenigstens einem stromdurchflossenen Heizleiter (14, 16), wobei der wenigstens eine Heizleiter (14, 16) durch wenigstens ein in Richtung einer Verbindungselement-Längsachse (V) langgestrecktes Verbindungselement (32) bezüglich der Trägeranordnung (24) getragen ist, **dadurch gekennzeichnet, dass** in Zuordnung zu wenigstens einem Verbindungselement (32) wenigstens eine Längenkompensationsanordnung (44) mit einem ersten Längenkompensationselement (46) mit einer eine Keilformation bereitstellenden ersten Abstützfläche (54) und einem zweiten Längenkompensationselement (48) mit einer an der ersten Abstützfläche (54) abgestützten, eine Gegen-Keilformation bereitstellenden zweiten Abstützfläche (56) vorgesehen ist, wobei das erste Längenkompensationselement und das zweite Längenkompensationselement (46, 48) zueinander unterschiedliche Wärmeausdehnungskoeffizienten aufweisen.

2. Abgasheizer nach Anspruch 1, **dadurch gekennzeichnet, dass** der wenigstens eine Heizleiter (14, 16) vermittels wenigstens einer Trägeranordnung-Abstützeinheit (38, 40) elektrisch isoliert bezüglich der Trägeranordnung (24) abgestützt ist, oder/und dass die Trägeranordnung (24) zwei die Heizleiteranordnung (18) in Richtung einer Abgasheizer-Längsachse (L) zwischen sich aufnehmende Trägerelemente (20, 22) umfasst und die Heizleiteranordnung (18) bezüglich jedes Trägerelements (20, 22) vermittels wenigstens einer Trägeranordnung-Abstützeinheit (38, 40) elektrisch isoliert abgestützt ist.

3. Abgasheizer nach Anspruch 2, **dadurch gekennzeichnet, dass** wenigstens eine Trägeranordnung-Abstützeinheit (38, 40) eine Längenkompensationsanordnung (44) bereitstellt.

4. Abgasheizer nach einem der Ansprüche 1-3, **dadurch gekennzeichnet, dass** wenigstens ein, vorzugsweise jedes Verbindungselement (32) in Richtung der Verbindungselement-Längsachse (V) bezüglich der Trägeranordnung (24) vermittels wenigstens einer Längenkompensationsanordnung (44) abgestützt ist.

5. Abgasheizer nach einem der Ansprüche 1-4, **dadurch gekennzeichnet, dass** bei wenigstens einer, vorzugsweise jeder Längenkompensationsanordnung (44) das erste Längenkompensationselement (46) eine von der ersten Abstützfläche (54) wenigstens teilweise umgebene erste Verbindungselement-Durchgriffsöffnung (50) aufweist oder/und das zweite Längenkompensationselement (48) eine von der zweiten Abstützfläche (56) wenigstens teilweise umgebene zweite Verbindungselement-Durchgriffsöffnung (52) aufweist.

6. Abgasheizer nach einem der Ansprüche 1-5, **dadurch gekennzeichnet, dass** bei wenigstens einer, vorzugsweise jeder Längenkompensationsanordnung (44) die erste Abstützfläche (54) oder/und die zweite Abstützfläche (56) kegelstumpfförmig ausgebildet ist.

7. Abgasheizer nach einem der Ansprüche 1-6, **dadurch gekennzeichnet, dass** die dem Längenkompensationselement mit kleinerem Wärmeausdehnungskoeffizienten zugeordnete Abstützfläche von erster Abstützfläche (54) und zweiter Abstützfläche (56) dem Verbindungselement (32) zugewandt orientiert ist, und dass die dem Längenkompensationselement mit größerem Wärmeausdehnungskoeffizienten zugeordnete Abstützfläche von erster Abstützfläche (54) und zweiter Abstützfläche (56) vom dem Verbindungselement (32) abgewandt orientiert ist.

8. Gasheizer nach Anspruch 6 und Anspruch 7, **dadurch gekennzeichnet, dass** die dem Längenkompensationselement mit kleinerem Wärmeausdehnungskoeffizienten zugeordnete Abstützfläche von erster Abstützfläche (54) und zweiter Abstützfläche (56) eine Innen-Kegelstumpffläche ist, und dass die dem Längenkompensationselement mit größerem Wärmeausdehnungskoeffizienten zugeordnete Abstützfläche von erster Abstützfläche (54) und zweiter Abstützfläche (56) eine Außen-Kegelstumpffläche ist.

9. Abgasheizer nach einem der Ansprüche 1-8, **dadurch gekennzeichnet, dass** bei wenigstens einer, vorzugsweise jeder Längenkompensationsanordnung (44) wenigstens ein Längenkompensationselement von erstem Längenkompensationselement (46) und zweitem Längenkompensationselement (48) mit Metallmaterial aufgebaut ist.

10. Abgasheizer nach einem der Ansprüche 1-9, **dadurch gekennzeichnet, dass** bei wenigstens einer, vorzugsweise jeder Längenkompensationsanordnung (44) wenigstens ein Längenkompensationselement von erstem Längenkompensationselement (46) und zweitem Längenkompensationselement (48) mit elektrisch isolierendem Material, vorzugsweise Keramikmaterial, aufgebaut ist.

11. Abgasheizer nach einem der Ansprüche 1-10, **dadurch gekennzeichnet, dass** bei wenigstens einer, vorzugsweise jeder Längenkompensationsanordnung (44) das erste Längenkompensationselement (46) eine zur Verbindungselement-Längsachse (V) im Wesentlichen orthogonale dritte Abstützfläche (58) aufweist oder/und das zweite Längenkompensationselement (48) eine zur Verbindungselement-Längsachse (V) im Wesentlichen orthogonale vierte Abstützfläche (60) aufweist.

12. Abgasheizer nach einem der Ansprüche 1-11, **dadurch gekennzeichnet, dass** wenigstens ein, vorzugsweise jedes Verbindungselement (32) einen Schraubbolzen mit einem Kopf (36) und einem Außengewindeschaft (34) sowie eine in Gewindeeingriff mit dem Außengewindeschaft (34) stehende Mutter (37) umfasst.

13. Abgasheizer nach Anspruch 4 und Anspruch 12, **dadurch gekennzeichnet, dass** bei wenigstens einem, vorzugsweise jedem Verbindungselement (32) der Kopf (36) oder/und die Mutter (37) vermittels einer Längenkompensationsanordnung (44) bezüglich der Trägeranordnung (24) abgestützt ist.

14. Abgasheizer nach einem der Ansprüche 1-13, **dadurch gekennzeichnet, dass** wenigstens ein, vorzugsweise jedes Verbindungselement auf 32) einen in wenigstens einem, vorzugsweise jedem axialen Endbereich mit der Trägeranordnung (24) durch Materialschluss verbundenen Verbindungsbolzen umfasst.

15. Abgasanlage für eine Brennkraftmaschine, umfassend wenigstens einen Abgasheizer (10) nach einem der vorangehenden Ansprüche.

## Claims

1. An exhaust gas heater for an exhaust system of an internal combustion engine, comprising a carrier arrangement (24) and a heating conductor arrangement (18) supported on the carrier arrangement (24) and having at least one heating conductor (14, 16), through which current flows, wherein the at least one heating conductor (14, 16) is supported with respect to the carrier arrangement (24) by at least one connecting element (32), which is elongate in the direction of a connecting element longitudinal axis (V), **characterized in that** at least one length compensation arrangement (44) having a first length compensation element (46), which has a first supporting surface (54) providing a wedge formation, and a second length compensation element (48), which has a second supporting surface (56) supported on the first supporting surface (54) and providing a counter-wedge formation, is provided in association with at least one connecting element (32), wherein the first length compensation element and the second length compensation element (46, 48) have different coefficients of thermal expansion than one another.

2. The exhaust gas heater as claimed in claim 1, **characterized in that** the at least one heating conductor (14, 16) is supported in an electrically insulated manner with respect to the carrier arrangement (24) by means of at least one carrier arrangement supporting unit (38, 40), or/and **in that** the carrier arrangement (24) comprises two carrier elements (20, 22) accommodating the heating conductor arrangement (18) between them in the direction of an exhaust gas heater longitudinal axis (L), and the heating conductor arrangement (18) is supported in an electrically insulated manner with respect to each carrier element (20, 22) by means of at least one carrier arrangement supporting unit (38, 40).

3. The exhaust gas heater as claimed in claim 2, **characterized in that** at least one carrier arrangement supporting unit (38, 40) provides a length compensation arrangement (44).

4. The exhaust gas heater as claimed in any of claims 1-3, **characterized in that** at least one, preferably each, connecting element (32) is supported with respect to the carrier arrangement (24) in the direction of the connecting element longitudinal axis (V) by means of at least one length compensation arrangement (44).

5. The exhaust gas heater as claimed in any of claims 1-4, **characterized in that**, in the case of at least one, preferably each, length compensation arrangement (44), the first length compensation element (46) has a first connecting element penetration opening (50) which is at least partially surrounded by the first supporting surface (54), or/and the second length compensation element (48) has a second connecting element penetration opening (52) which is at least partially surrounded by the second supporting surface (56).

6. The exhaust gas heater as claimed in any of claims 1-5, **characterized in that**, in the case of at least one, preferably each, length compensation arrangement (44), the first supporting surface (54) or/and the second supporting surface (56) are/is of frustoconical design.

7. The exhaust gas heater as claimed in any of claims 1-6, **characterized in that** that supporting surface of the first supporting surface (54) and the second supporting surface (56) which is assigned to the length compensation element having a lower coefficient of thermal expansion is oriented toward the connecting element (32), and **in that** that supporting surface of the first supporting surface (54) and the second supporting surface (56) which is assigned to the length compensation element having a higher coefficient of thermal expansion is oriented away from the connecting element (32).

8. The exhaust gas heater as claimed in claim 6 and claim 7, **characterized in that** that supporting surface of the first supporting surface (54) and the second supporting surface (56) which is assigned to the length compensation element having a lower coefficient of thermal expansion is an inner frustoconical surface, and **in that** that supporting surface of the first supporting surface (54) and the second supporting surface (56) which is assigned to the length compensation element having a higher coefficient of thermal expansion is an outer frustoconical surface.

9. The exhaust gas heater as claimed in any of claims 1-8, **characterized in that**, in the case of at least one, preferably each, length compensation arrangement (44), at least one length compensation element of the first length compensation element (46) and the second length compensation element (48) is constructed with metal material.

10. The exhaust gas heater as claimed in any of claims 1-9, **characterized in that**, in the case of at least one, preferably each, length compensation arrangement (44), at least one length compensation element of the first length compensation element (46) and the second length compensation element (48) is constructed with electrically insulating material, preferably ceramic material.

11. The exhaust gas heater as claimed in any of claims 1-10, **characterized in that**, in the case of at least one, preferably each, length compensation arrangement (44), the first length compensation element (46) has a third supporting surface (58), which is substantially orthogonal to the connecting element longitudinal axis (V), or/and the second length compensation element (48) has a fourth supporting surface (60), which is substantially orthogonal to the connecting element longitudinal axis (V).

12. The exhaust gas heater as claimed in any of claims 1-11, **characterized in that** at least one, preferably each, connecting element (32) comprises a screw bolt, which has a head (36) and an externally threaded shank (34), as well as a nut (37), which is in threaded engagement with the externally threaded shank (34).

13. The exhaust gas heater as claimed in claim 4 and claim 12, **characterized in that**, in the case of at least one, preferably each, connecting element (32), the head (36) or/and the nut (37) is supported with respect to the carrier arrangement (24) by means of a length compensation arrangement (44).

14. The exhaust gas heater as claimed in any of claims 1-13, **characterized in that** at least one, preferably each, connecting element (32) comprises a connecting bolt, which is connected materially to the carrier arrangement (24) in at least one, preferably each, axial end region.

15. An exhaust system for an internal combustion engine, comprising at least one exhaust gas heater (10) as claimed in any of the preceding claims.

## Revendications

1. Un réchauffeur de gaz d'échappement pour un système d'échappement d'un moteur à combustion interne, comprenant un dispositif porteur (24) et un dispositif de conducteur chauffant (18) supporté par le dispositif porteur (24) et comportant au moins un conducteur chauffant (14, 16) traversé par le courant, dans lequel ledit au moins un conducteur chauffant (14, 16) est supporté par rapport au dispositif porteur (24) par au moins un élément de connexion (32), qui est allongé dans la direction d'un axe longitudinal de l'élément de connexion (V), **caractérisé en ce qu'**au moins un dispositif de compensation de longueur (44) comportant un premier élément de compensation de longueur (46), qui a une première surface d'appui (54) assurant une formation de cale, et un deuxième élément de compensation de longueur (48), qui a une deuxième surface d'appui (56) supportée sur la première surface d'appui (54) et assurant une formation de contre-cale, est fourni en association avec au moins un élément de connexion (32), dans lequel le premier élément de compensation de longueur et le deuxième élément de compensation de longueur (46, 48) ont des coefficients de dilatation thermique différents l'un de l'autre.

2. Le réchauffeur de gaz d'échappement selon la revendication 1, **caractérisé en ce que** ledit au moins un conducteur chauffant (14, 16) est supporté de manière électriquement isolée par rapport au dispositif porteur (24) au moyen d'au moins une unité de support de dispositif porteur (38, 40), ou/et **en ce que** le dispositif porteur (24) comprend deux éléments porteurs (20, 22) entre lesquels est logé le conducteur chauffant (18) en direction de l'axe longitudinal du réchauffeur de gaz d'échappement (L), et que le conducteur chauffant (18) est supporté de manière électriquement isolée par rapport à chaque élément porteur (20, 22) au moyen d'au moins une unité de support de dispositif porteur (38, 40).

3. Le réchauffeur de gaz d'échappement selon la revendication 2, **caractérisé en ce qu'**au moins une unité de support de dispositif porteur (38, 40) fournit un dispositif de compensation de longueur (44).

4. Le réchauffeur de gaz d'échappement selon l'une des revendications 1 à 3, **caractérisé en ce qu'**au moins un, de préférence chaque, élément de connexion (32) est supporté par rapport au dispositif porteur (24) dans la direction de l'axe longitudinal de l'élément de connexion (V) au moyen d'au moins un dispositif de compensation de longueur (44).

5. Le réchauffeur de gaz d'échappement selon l'une des revendications 1 à 4, **caractérisé en ce que**, dans le cas d'au moins un, de préférence chaque, dispositif de compensation de longueur (44), le premier élément de compensation de longueur (46) a une première ouverture de pénétration d'élément de connexion (50) qui est au moins partiellement entourée par la première surface d'appui (54), ou/et le deuxième élément de compensation de longueur (48) a une deuxième ouverture de pénétration d'élément de connexion (52) qui est au moins partiellement entourée par la deuxième surface d'appui (56).

6. Le dispositif de réchauffeur de gaz d'échappement selon l'une des revendications 1 à 5, **caractérisé en ce que**, dans le cas d'au moins un, de préférence chaque, dispositif de compensation de longueur (44), la première surface d'appui (54) ou/et la deuxième surface d'appui (56) est/sont de forme tronconique.

7. Le réchauffeur de gaz d'échappement selon l'une des revendications 1 à 6, **caractérisé en ce que** la surface d'appui de la première surface d'appui (54) et de la deuxième surface d'appui (56) qui est associée à l'élément de compensation de longueur ayant un coefficient de dilatation thermique inférieur est orientée vers l'élément de connexion (32), et **en ce que** la surface d'appui de la première surface d'appui (54) et de la deuxième surface d'appui (56) qui est associée à l'élément de compensation de longueur ayant un coefficient de dilatation thermique supérieur est orientée à l'opposé de l'élément de connexion (32).

8. Le réchauffeur de gaz d'échappement selon la revendication 6 et la revendication 7, **caractérisé en ce que** la surface d'appui de la première surface d'appui (54) et de la deuxième surface d'appui (56) qui est associée à l'élément de compensation de longueur ayant un coefficient de dilatation thermique inférieur est une surface tronconique intérieure, et **en ce que** la surface d'appui de la première surface d'appui (54) et de la deuxième surface d'appui (56) qui est associée à l'élément de compensation de longueur ayant un coefficient de dilatation thermique plus élevé est une surface tronconique extérieure.

9. Le réchauffeur de gaz d'échappement selon l'une des revendications 1 à 8, **caractérisé en ce que**, dans le cas d'au moins un, de préférence chaque, dispositif de compensation de longueur (44), au moins un élément de compensation de longueur du premier élément de compensation de longueur (46) et du deuxième élément de compensation de longueur (48) est construit en matériau métallique.

10. Le réchauffeur de gaz d'échappement selon l'une des revendications 1 à 9, **caractérisé en ce que**, dans le cas d'au moins un, de préférence chaque, dispositif de compensation de longueur (44), au moins un élément de compensation de longueur du premier élément de compensation de longueur (46) et du deuxième élément de compensation de longueur (48) est constitué d'un matériau électriquement isolant, de préférence un matériau céramique.

11. Le dispositif de réchauffeur de gaz d'échappement selon l'une des revendications 1 à 10, **caractérisé en ce que**, dans le cas d'au moins un, de préférence chaque, dispositif de compensation de longueur (44), le premier élément de compensation de longueur (46) a une troisième surface d'appui (58), qui est sensiblement orthogonale à l'axe longitudinal de l'élément de connexion (V), ou/et le deuxième élément de compensation de longueur (48) a une quatrième surface d'appui (60), qui est sensiblement orthogonale à l'axe longitudinal de l'élément de connexion (V).

12. Le dispositif de réchauffeur de gaz d'échappement selon l'une des revendications 1 à 11, **caractérisé en ce qu'**au moins un, de préférence chaque, élément de connexion (32) comprend un boulon à vis, qui a une tête (36) et une tige filetée à l'extérieur (34), ainsi qu'un écrou (37), qui est en prise filetée avec la tige filetée à l'extérieur (34).

13. Le réchauffeur de gaz d'échappement selon la revendication 4 et la revendication 12, **caractérisé en ce que**, dans le cas d'au moins un, de préférence chaque, élément de connexion (32), la tête (36) ou/et l'écrou (37) est supporté par rapport au dispositif porteur (24) au moyen d'un dispositif de compensation de longueur (44).

14. Le réchauffeur de gaz d'échappement selon l'une des revendications 1 à 13, **caractérisé en ce qu'**au moins un, de préférence chaque, élément de connexion (32) comprend un boulon de connexion, qui est relié matériellement au dispositif porteur (24) dans au moins une, de préférence chaque, zone d'extrémité axiale.

15. Un système d'échappement pour un moteur à combustion interne, comprenant au moins un réchauffeur de gaz d'échappement (10) selon l'une des revendications précédentes.
